# EUROPEAN PATENT APPLICATION

(11) **EP 4 656 424 A1**
(43) Date of publication of application: **03.12.2025**
(21) Application number: 25176198.7
(22) Date of filing: 13.05.2025
(51) Int. Cl.: B60K 1/00, B60K 1/02, B60K 1/04

(54) **BATTERY ELECTRIC VEHICLE**

(30) Priority: 27.05.2024 JP 2024085605
(71) Applicant: TOYOTA JIDOSHA KABUSHIKI KAISHA, Toyota-shi, Aichi-ken 471-8571 (JP)
(72) Inventor: ICHIKAWA, Akitaka, TOYOTA-SHI, AICHI-KEN, 471-8571 (JP)
(74) Representative: Cabinet Beau de Loménie

(57) **Abstract**

A battery electric vehicle (100) includes a battery (14), a drive wheel (11) configured to be driven by electricity stored in the battery, a drive unit (20), a harness (18) configured to supply power from the battery to the drive unit, a connector (19) connecting the harness to the battery, a passenger compartment (28), and a driver's seat (12) and a front passenger seat disposed in the passenger compartment. The battery (14) includes a rear section (17) that is disposed rearward of the driver's seat and the front passenger seat and houses multiple battery cells. The battery cells are stacked vertically upward to a position higher than seating surfaces of the driver's seat and the front passenger seat. The drive unit (20) is disposed rearward of the battery (14). The connector (19) is disposed on an upper surface of the rear section (17) of the battery (14).

## Description

### BACKGROUND

### 1. Field

The present disclosure relates to a battery electric vehicle.

### 2. Description of Related Art

Japanese Laid-Open Patent Publication No. 2018-158688 discloses a battery electric vehicle. The battery electric vehicle includes a battery.

In order to extend the cruising distance of a battery electric vehicle, it is necessary to increase the capacity of the battery. Since the available space inside the vehicle is limited, the battery layout must be carefully designed to accommodate a larger-capacity battery. Power from the battery is supplied to motors via harnesses. The battery is provided with connectors to which the harnesses are connected. The positions of the connectors should be determined in consideration of workability during maintenance and manufacturing processes. Therefore, the battery layout should also be determined in consideration of the ease of access to the connectors.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a battery electric vehicle includes a battery, a drive wheel configured to be driven by electricity stored in the battery, a drive unit including a motor and a speed reducer configured to transmit rotation generated by the motor to a drive shaft, a harness configured to supply power from the battery to the drive unit, a connector connecting the harness to the battery, a passenger compartment, and a driver's seat and a front passenger seat disposed in the passenger compartment. The battery includes a rear section that is disposed rearward of the driver's seat and the front passenger seat and accommodates multiple battery cells. The battery cells are stacked vertically upward to a position higher than seating surfaces of the driver's seat and the front passenger seat. The drive unit is disposed rearward of the battery. The connector is disposed on an upper surface of the rear section of the battery.

Other features and aspects will be apparent from the following detailed description, the drawings, and the claims.

### BRIEF DESCRIPTION OF THE DRAWINGS

Fig. 1 is a schematic diagram of an arrangement of a battery and components around the battery when a battery electric vehicle according to an embodiment is viewed from above.
Fig. 2 is a schematic diagram of the battery electric vehicle shown in Fig. 1, illustrating the arrangement of the battery and the components around the battery when the battery electric vehicle is viewed from the side.
Fig. 3 is a schematic diagram of the battery electric vehicle shown in Fig. 1, illustrating the arrangement of the battery and the components around the battery when the battery electric vehicle is viewed from the rear.
Fig. 4 is a schematic diagram of a battery electric vehicle according to a first modification, illustrating the arrangement of a battery and components around the battery when the battery electric vehicle is viewed from the rear.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

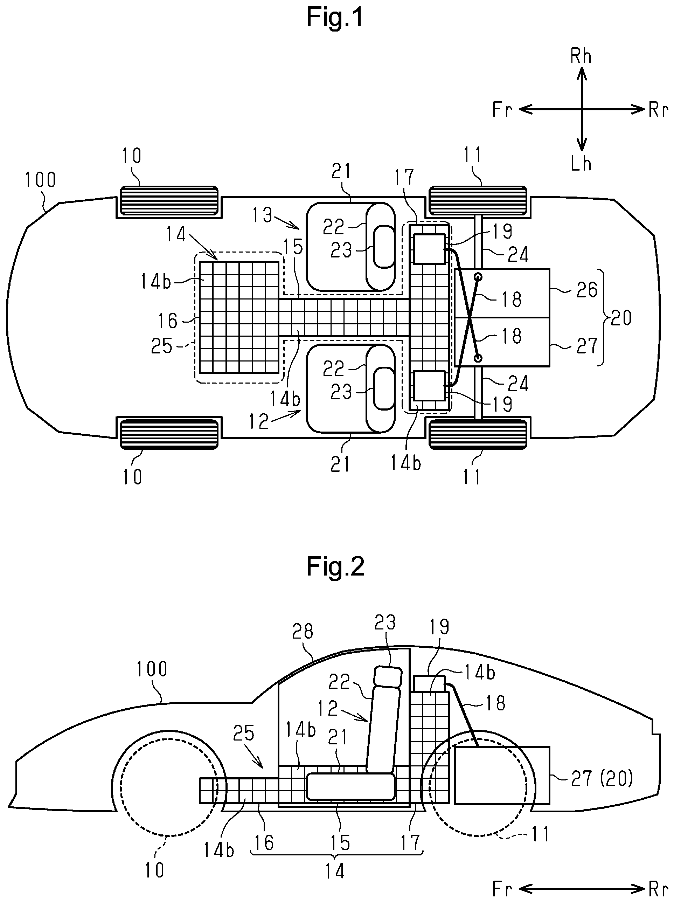

A battery electric vehicle 100 according to an embodiment will now be described with reference to Figs. 1 to 3.

In the following description, terms related to orientations or directions, such as "front", "rear", "upper", "lower", "right", and "left", are defined based on the battery electric vehicle 100.

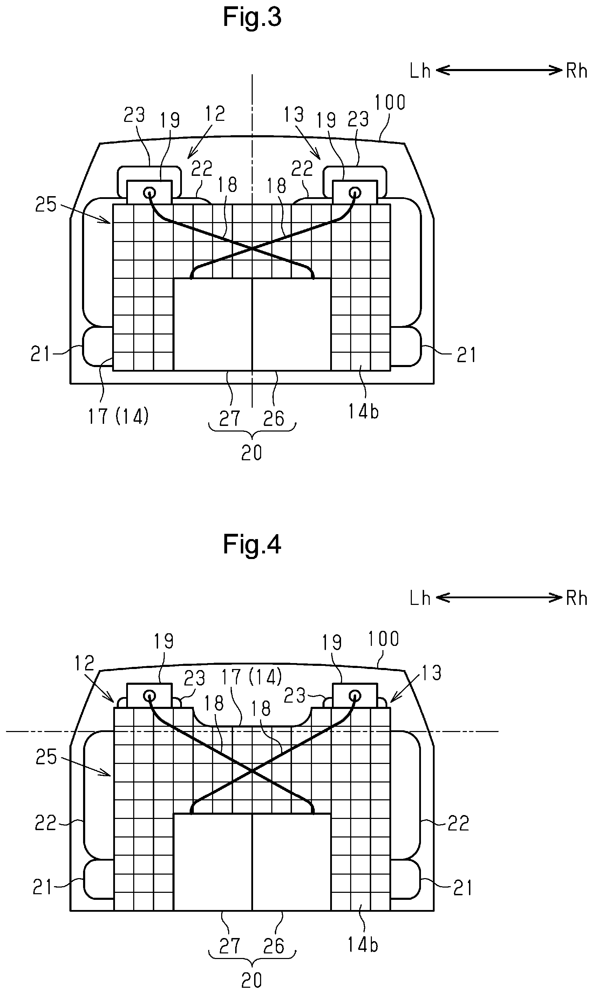

In Figs. 1 and 2, "Fr" indicates the front direction of the battery electric vehicle 100. In Figs. 1 and 2, "Rr" indicates the rear direction of the battery electric vehicle 100. In Figs. 1 and 3, "Rh" indicates the right side as viewed from an occupant facing forward in the battery electric vehicle 100. In Figs. 1 and 3, "Lh" indicates the left side as viewed from an occupant facing forward in the battery electric vehicle 100.

Arrangement of a Battery 14 in the Battery Electric Vehicle 100

Fig. 1 shows an arrangement of a battery 14 and components around the battery 14 when the battery electric vehicle 100 is viewed from above. Fig. 2 shows the arrangement of the battery 14 and the components around the battery 14 when the battery electric vehicle 100 is viewed from the left side in Fig. 1. Hereinafter, the arrangement of the components included in the battery electric vehicle 100 will be described with reference to Figs. 1 and 2.

As shown in Fig. 1, the battery electric vehicle 100 includes a driver's seat 12 and a front passenger seat 13. As shown in Figs. 1 and 2, each of the driver's seat 12 and the front passenger seat 13 includes a seating surface 21, a backrest 22, and a headrest 23.

As shown in Fig. 1, the battery electric vehicle 100 includes the battery 14. The battery 14 houses multiple battery cells 14b. The battery 14 stores electricity in the battery cells 14b.

The battery 14 includes an intermediate section 15, a front section 16, and a rear section 17.

As shown in Figs. 1 and 2, the intermediate section 15 is disposed between a driver's seat 12 and a front passenger seat 13 so as to extend from a front end to a rear end of a passenger compartment 28. The intermediate section 15 houses a portion of the battery cells 14b. The battery cells 14b are stacked.

As shown in Figs. 1 and 2, the front section 16 is disposed forward of the intermediate section 15. Similarly to the intermediate section 15, the front section 16 houses a portion of the battery cells 14b. The battery cells 14b are stacked.

As shown in Fig. 1, the rear section 17 is disposed rearward of the driver's seat 12 and the front passenger seat 13. Similarly to the intermediate section 15 and the front section 16, the rear section 17 houses a portion of the battery cells 14b. The battery cells 14b are stacked. As shown in Fig. 2, an upper end of the rear section 17 is located higher than the seating surfaces 21. The battery cells 14b accommodated in the rear section 17 are stacked vertically upward to a position higher than the seating surfaces 21 of the driver's seat 12 and the front passenger seat 13.

As described above, in the battery electric vehicle 100, the battery 14 is disposed not beneath the floor of the passenger compartment, but forward of the driver's seat 12 and the front passenger seat 13, between the driver's seat 12 and the front passenger seat 13, and rearward of the driver's seat 12 and the front passenger seat 13.

Arrangement of Drive Units 20 and Connectors 19 in Battery Electric Vehicle 100

As shown in Figs. 1 and 2, the battery electric vehicle 100 includes the drive units 20 located rearward of the battery 14. The drive units 20 each include a motor and a speed reducer.

The motor of each drive unit 20 outputs rotation using the power supplied from the battery 14.

The speed reducer of the drive unit 20 is connected to a drive shaft 24. The speed reducer transmits the rotation output from the motor to the drive shaft 24 after decelerating the rotation.

When the rotation output from the motor of each drive unit 20 is transmitted to the corresponding drive shaft 24, the corresponding rear wheel 11, which is connected to the drive shaft 24, rotates. The rear wheels 11 of the battery electric vehicle 100 are thus drive wheels.

In this manner, the drive units 20 drive the drive wheels using the electricity stored in the battery 14.

As shown in Fig. 1, the drive units 20 of the battery electric vehicle 100 include a right-side drive unit 26 and a left-side drive unit 27. As shown in Fig. 1, the right-side drive unit 26 is connected to a right rear wheel, which is one of the rear wheels 11. As shown in Fig. 1, the left-side drive unit 27 is connected to a left rear wheel, which is one of the rear wheels 11.

As shown in Figs. 1 and 2, the battery electric vehicle 100 includes connectors 19. As shown in Fig. 2, the connectors 19 are disposed on the upper surface of the rear section 17.

As shown in Figs. 1 and 2, harnesses 18 are connected to the connectors 19 from behind in the battery electric vehicle 100. As shown in Figs. 1 and 2, the harnesses 18 connect the connectors 19 to the drive units 20. As described above, the drive units 20 receive power from the battery 14. The connectors 19 connect the harnesses 18 to the battery 14. The harnesses 18 supply power from the battery 14 to the drive units 20.

As shown in Fig. 3, the battery 14 and the connectors 19 form a charging unit 25.

Configuration of the Charging Unit 25 in the Battery Electric Vehicle 100

Fig. 3 shows an arrangement of the battery 14 and components around the battery 14 when the battery electric vehicle 100 is viewed from the rear.

As shown in Figs. 1 and 3, the battery electric vehicle 100 includes two connectors 19. As shown in Figs. 1 and 3, one of the two connectors 19 is disposed rearward of a headrest 23 of the driver's seat 12. As shown in Figs. 1 and 3, the other connector 19 is disposed rearward of a headrest 23 of the front passenger seat 13.

Accordingly, the connectors 19 are disposed on the upper surface of the rear section 17 and at positions overlapping with the headrests 23 as viewed in a vehicle longitudinal direction.

A portion of the charging unit 25 that is located rearward of the headrests 23 of the driver's seat 12 and the front passenger seat 13, and between these headrests 23 in the vehicle width direction has its height adjusted to ensure adequate rearward visibility.

Specifically, as shown in Fig. 3, the upper end of the rear section 17 is located lower than the headrest 23 of the driver's seat 12 and the headrest 23 of the front passenger seat 13. As described above, the connectors 19 are disposed at positions overlapping with the headrests 23 when viewed in the vehicle longitudinal direction. Therefore, the upper end of the portion of the charging unit 25 that is located rearward of the headrest 23 of the driver's seat 12 and the headrest 23 of the front passenger seat 13, and between the headrests 23 in the vehicle width direction is located lower than the headrests 23.

### Manner of Connection of the Harnesses 18 in the Battery Electric Vehicle 100

As shown in Figs. 1 and 3, the battery 14 is connected to the drive units 20 by the multiple harnesses 18. As shown in Figs. 1 and 3, the two connectors 19 are arranged side by side in the vehicle width direction on the upper surface of the rear section 17.

The long-dash short-dash line in Fig. 3 indicates the center of the battery electric vehicle 100 in the vehicle width direction when the battery electric vehicle 100 is viewed from the rear.

As shown in Fig. 3, when the battery electric vehicle 100 is viewed from the rear, the right-side drive unit 26 is disposed on the right side of the center of the battery electric vehicle 100 in the vehicle width direction. The left-side drive unit 27 is disposed on the left side of the center of the battery electric vehicle 100 in the vehicle width direction. Accordingly, the right-side drive unit 26 is disposed on the right side of the left-side drive unit 27. In other words, the left-side drive unit 27 is disposed on the left side of the right-side drive unit 26.

As shown in Fig. 3, the harness 18 connected to the connector 19 disposed on the right side of the long-dash short-dash line is connected to a portion near the left end of the left-side drive unit 27. In this manner, when the battery electric vehicle 100 is viewed from the rear, the harness 18 connected to the connector 19 located on the right side of the center of the battery electric vehicle 100 in the vehicle width direction is connected to the drive unit 20 on the left side of the center of the battery electric vehicle 100. In other words, when the battery electric vehicle 100 is viewed from the rear, the harness 18 connected to the connector 19 located on the right side of the center of the battery electric vehicle 100 in the vehicle width direction is connected to the left-side drive unit 27.

As shown in Fig. 3, the harness 18 connected to the connector 19 disposed on the left side of the long-dash short-dash line is connected to a portion near the right end of the right-side drive unit 26. In this manner, when the battery electric vehicle 100 is viewed from the rear, the harness 18 connected to the connector 19 located on the left side of the center of the battery electric vehicle 100 in the vehicle width direction is connected to the drive unit 20 on the right side of the center of the battery electric vehicle 100. In other words, when the battery electric vehicle 100 is viewed from the rear, the harness 18 connected to the connector 19 located on the left side of the center of the battery electric vehicle 100 in the vehicle width direction is connected to the right-side drive unit 26.

As described above, in Fig. 3, the connector 19 disposed on the right side of the center in the vehicle width direction of the battery electric vehicle 100 is connected not to the right-side drive unit 26 but to the left-side drive unit 27. In Fig. 3, the connector 19 disposed on the left side of the center in the vehicle width direction of the battery electric vehicle 100 is connected not to the left-side drive unit 27 but to the right-side drive unit 26.

As described above, in the battery electric vehicle 100, each of the harnesses 18 is connected to, among the connectors 19, a connector 19 other than the connector 19 closest to a portion of that harness 18 that is connected to the drive unit 20. In the battery electric vehicle 100, when viewed from the rear of the battery electric vehicle 100, the harnesses 18 connected to different connectors 19 intersect with each other.

### Operation of the Present Embodiment

A space extends rearward of the driver's seat 12 and the front passenger seat 13, at least up to the height of the backrests 22 of the driver's seat 12 and the front passenger seat 13. Since the rear section 17, in which battery cells are stacked vertically upward, is arranged within this space, the battery capacity of the battery 14 is ensured. The connectors 19 are provided on the upper surface of the rear section 17. The connectors 19 are located at relatively high positions, allowing easy access for an operator. As a result, the operator can efficiently perform attachment and detachment operations for the harnesses 18.

### Advantages of the Present Embodiment

(1) The battery electric vehicle 100 enables the installation of the high-capacity battery 14 while ensuring ease of operation when attaching and detaching the harnesses 18.
(2) In the battery electric vehicle 100, the battery 14 is connected to the drive units 20 via the multiple harnesses 18. The multiple connectors 19 are arranged side by side in the vehicle width direction on the upper surface of the rear section 17 of the battery 14. Each harness 18 is connected to a connector 19 other than the connector 19 that is closest to the portion of that harness 18 that is connected to the drive unit 20. When viewed from the rear of the battery electric vehicle 100, the harnesses 18 connected to different connectors 19 intersect with each other.
   In a case in which the harnesses 18 are made of a material having a relatively high rigidity, if the routing lengths of the harnesses 18 are relatively short, the harnesses 18 cannot be sufficiently bent, and the harnesses 18 may not be properly routed to the connectors 19. In the battery electric vehicle 100 of the present embodiment, the routing length of each harness 18 is increased by not connecting that harness 18 to the nearest connector 19. Thus, even when the harnesses 18 are made of a material having high rigidity, the harnesses 18 can be easily connected to the connectors 19.
(3) When the battery electric vehicle 100 is viewed from the rear, the harness 18 connected to the connector 19 located on the right side of the center of the battery electric vehicle 100 in the vehicle width direction is connected to the drive unit 20 on the left side of the center of the battery electric vehicle 100. When the battery electric vehicle 100 is viewed from the rear, the harness 18 connected to the connector 19 located on the left side of the center of the battery electric vehicle 100 in the vehicle width direction is connected to the drive unit 20 on the right side of the center of the battery electric vehicle 100.
   In the battery electric vehicle 100, each harness 18 extends in the vehicle width direction from left to right or from right to left, increasing the routing length while connecting one of the connectors 19 to the corresponding drive unit 20. Thus, even when the harnesses 18 are made of a material having high rigidity, the harnesses 18 can be easily connected to the connectors 19.
(4) The drive units 20 include the right-side drive unit 26 connected to the right rear wheel and the left-side drive unit 27 connected to the left rear wheel. When the battery electric vehicle 100 is viewed from the rear, the right-side drive unit 26 is disposed on the right side of the left-side drive unit 27. In other words, when the battery electric vehicle 100 is viewed from the rear, the left-side drive unit 27 is disposed on the left side of the right-side drive unit 26. When the battery electric vehicle 100 is viewed from the rear, the harness 18 connected to the connector 19 located on the right side of the center of the battery electric vehicle 100 in the vehicle width direction is connected to the left-side drive unit 27. When the battery electric vehicle 100 is viewed from the rear, the harness 18 connected to the connector 19 located on the left side of the center of the battery electric vehicle 100 in the vehicle width direction is connected to the right-side drive unit 26.
   The right-side drive unit 26 and the left-side drive unit 27 of the drive units 20 are arranged side by side in the vehicle width direction. The harnesses 18 are routed in a manner that increases the routing lengths, taking into consideration the positions of the drive units 20 and the connectors 19. Thus, even when the harnesses 18 are made of a material having high rigidity, the harnesses 18 can be easily connected to the connectors 19.
(5) The battery 14 and the connectors 19 form the charging unit 25. The upper end of the portion of the charging unit 25 that is located rearward of the headrests 23 of the driver's seat 12 and the front passenger seat 13, and between the headrests 23 in the vehicle width direction is located lower than the headrests 23.
   Since the rear section 17 of the battery 14 is stacked vertically upward, the charging unit 25 may obstruct the user's rearward visibility. The upper end of the portion of the charging unit 25 of the battery electric vehicle 100 that is located between the headrests 23 of the driver's seat 12 and the front passenger seat 13 in the vehicle width direction is located lower than the headrests 23. Thus, the battery electric vehicle 100 ensures adequate rearward visibility for the user.
(6) The connectors 19 are disposed on the upper surface of the rear section 17 and at positions overlapping with the headrests 23 as viewed in a vehicle longitudinal direction.
   Since the rear section 17 of the battery 14 is stacked vertically upward, the connectors 19 may obstruct the user's rearward visibility. In the battery electric vehicle 100, the connectors 19 are disposed rearward of the headrests 23. Thus, the battery electric vehicle 100 ensures adequate rearward visibility for the user.
(7) The battery 14 includes the intermediate section 15 and the front section 16. The intermediate section 15 houses multiple battery cells. The intermediate section 15 is disposed between the driver's seat 12 and the front passenger seat 13 and extends from the front end to the rear end of the passenger compartment 28. The front section 16 houses multiple battery cells. The front section 16 is disposed forward of the intermediate section 15.

In the battery electric vehicle 100, the battery 14 is disposed not beneath the floor of the passenger compartment, but forward of the driver's seat 12 and the front passenger seat 13, between the driver's seat 12 and the front passenger seat 13, and rearward of the driver's seat 12 and the front passenger seat 13. As a result, the battery electric vehicle 100 ensures a sufficient capacity of the battery 14 without increasing the vehicle height, as compared with a case in which the battery 14 is disposed beneath the floor of the passenger compartment.

### Modifications

The above-described embodiment may be modified as follows. The above-described embodiment and the following modifications can be combined if the combined modifications remain technically consistent with each other.

In the battery electric vehicle 100, as shown in Fig. 1, the driver's seat 12 is disposed on the left side in Fig. 1, and the front passenger seat 13 is disposed on the right side in Fig. 1. The arrangement of the driver's seat 12 and the front passenger seat 13 may be reversed from that in Fig. 1.

In the above-described battery electric vehicle 100, the rear wheels 11 are drive wheels. The battery electric vehicle 100 may also be a four-wheel-drive vehicle in which, in addition to the rear wheels 11, the front wheels 10 are also driven.

The above-described battery electric vehicle 100 includes two connectors 19. The number of the connectors 19 included in the battery electric vehicle 100 is not limited to the above-described embodiment. That is, the battery electric vehicle 100 may include one connector 19 or three or more connectors 19.

The battery electric vehicle 100 includes two seats, that is, the driver's seat 12 and the front passenger seat 13. The number of seats included in the battery electric vehicle 100 may be three or more.

In the above-described embodiment, the battery 14 includes the intermediate section 15, the front section 16, and the rear section 17. The battery 14 does not necessarily need to include one or both of the intermediate section 15 and the front section 16 as long as the battery 14 includes the rear section 17.

The manner of connection of the harnesses 18 in the battery electric vehicle 100 is not limited to the above-described embodiment. For example, when the battery electric vehicle 100 is viewed from the rear, the harnesses 18 may be connected to different connectors 19 without intersecting with each other.

In this case, one of the harnesses 18 is connected to the connector 19 located on the right side of the center of the battery electric vehicle 100 in the vehicle width direction. When the battery electric vehicle 100 is viewed from the rear, the portion of that harness 18 that is connected to the corresponding drive unit 20 does not necessarily need to be on the left side of the center of the battery electric vehicle 100. Also, one of the harnesses 18 is connected to the connector 19 located on the left side of the center of the battery electric vehicle 100 in the vehicle width direction. When the battery electric vehicle 100 is viewed from the rear, the portion of that harness 18 that is connected to the corresponding drive unit 20 does not necessarily need to be on the right side of the center of the battery electric vehicle 100.

In this case, when the battery electric vehicle 100 is viewed from the rear, the harness 18 connected to the connector 19 located on the right side of the center of the battery electric vehicle 100 in the vehicle width direction may be connected to the right-side drive unit 26. When the battery electric vehicle 100 is viewed from the rear, the harness 18 connected to the connector 19 located on the left side of the center of the battery electric vehicle 100 in the vehicle width direction may be connected to the left-side drive unit 27.

The positions of the connectors 19 in the battery electric vehicle 100 are not limited to the above-described embodiment. For example, the connectors 19 of the battery electric vehicle 100 may be disposed at positions other than positions overlapping with the headrests 23 when viewed in the vehicle longitudinal direction.

The drive units 20 of the battery electric vehicle 100 include the right-side drive unit 26 connected to the right rear wheel and the left-side drive unit 27 connected to the left rear wheel. Alternatively, the battery electric vehicle 100 may include a single drive unit 20 connected to both the right rear wheel and the left rear wheel, instead of including the right-side drive unit 26 and the left-side drive unit 27.

The configuration of the charging unit 25 included in the battery electric vehicle 100 is not limited to the above-described embodiment.

Fig. 4 shows an arrangement of a battery 14 and components around the battery 14 when a battery electric vehicle 100 according to a first modification is viewed from the rear. The battery electric vehicle 100 may employ the configuration as in the first modification.

In Fig. 4, directions are indicated by arrows as in Fig. 3. In Fig. 4, "Rh" indicates the right side as viewed from an occupant facing forward in the battery electric vehicle 100. In Fig. 4, "Lh" indicates the left side as viewed from an occupant facing forward in the battery electric vehicle 100.

The long-dash double-short-dash line in Fig. 4 indicates the height of the lower end of the headrest 23 of each of the driver's seat 12 and the front passenger seat 13.

In the battery electric vehicle 100 according to the first modification, the upper end of a portion of the charging unit 25 that is located rearward of the headrests 23 of the driver's seat 12 and the front passenger seat 13, and between the headrests 23 in the vehicle width direction is located higher than that in Fig. 3. Specifically, as shown in Fig. 4, in the battery electric vehicle 100 according to the first modification, the upper end of the rear section 17 is located higher than the lower ends of the headrests 23. Therefore, as shown in Fig. 4, the upper end of the portion of the charging unit 25 that is located rearward of the headrests 23 of the driver's seat 12 and the front passenger seat 13, and between the headrests 23 in the vehicle width direction, is located higher than the lower ends of the headrests 23.

As shown in Fig. 4, in the battery electric vehicle 100 according to the first modification, the height of the upper end of the portion of the charging unit 25 located behind the headrests 23 of the driver's seat 12 and the front passenger seat 13, and between the headrests 23 in the vehicle width direction is higher than the lower ends of the headrests 23. However, the height of the upper end is sufficiently low to ensure adequate rearward visibility. Therefore, the battery electric vehicle 100 according to the first modification ensures adequate rearward visibility for the user.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A battery electric vehicle (100), comprising:
a battery (14);
a drive wheel (11) configured to be driven by electricity stored in the battery (14);
a drive unit (20) including a motor and a speed reducer configured to transmit rotation generated by the motor to a drive shaft (24);
a harness (18) configured to supply power from the battery (14) to the drive unit (20);
a connector (19) connecting the harness (18) to the battery (14);
a passenger compartment (28); and
a driver's seat (12) and a front passenger seat (13) disposed in the passenger compartment (28), wherein
the battery (14) includes a rear section (17) that is disposed rearward of the driver's seat (12) and the front passenger seat (13) and accommodates multiple battery cells (14b),
the battery cells (14b) are stacked vertically upward to a position higher than seating surfaces (21) of the driver's seat (12) and the front passenger seat (13),
the drive unit (20) is disposed rearward of the battery (14), and
the connector (19) is disposed on an upper surface of the rear section (17) of the battery (14).

2. The battery electric vehicle (100) according to claim 1, wherein
the harness (18) is one of multiple harnesses,
the connector (19) is one of multiple connectors,
the battery (14) is connected to the drive unit (20) by the harnesses (18),
the connectors (19) are arranged side by side in a vehicle width direction on the upper surface of the rear section (17),
each harness (18) is connected to, among the connectors (19), a connector (19) other than the connector (19) closest to a portion of that harness (18) that is connected to the drive unit (20), and
when viewed from a rear of the battery electric vehicle (100), the harnesses (18) connected to different connectors (19) intersect with each other.

3. The battery electric vehicle (100) according to claim 2, wherein
when viewed from the rear of the battery electric vehicle (100), the harness (18) connected to the connector (19) on a right side of a center of the battery electric vehicle (100) in the vehicle width direction is connected to the drive unit (20) on a left side of the center, and
when viewed from the rear of the battery electric vehicle (100), the harness (18) connected to the connector (19) on the left side of the center is connected to the drive unit (20) on the right side of the center.

4. The battery electric vehicle (100) according to claim 2 or 3, wherein
the drive unit (20) includes:
a right-side drive unit (26) connected to a right rear wheel; and
a left-side drive unit (27) connected to a left rear wheel,
when viewed from the rear of the battery electric vehicle (100), the right-side drive unit (26) is disposed on a right side of the left-side drive unit (27),
when viewed from the rear of the battery electric vehicle (100), the left-side drive unit (27) is disposed on a left side of the right-side drive unit (26),
when viewed from the rear of the battery electric vehicle (100), the harness (18) connected to the connector (19) on a right side of a center of the battery electric vehicle (100) in the vehicle width direction is connected to the left-side drive unit (27), and
when viewed from the rear of the battery electric vehicle (100), the harness (18) connected to the connector (19) on a left side of the center is connected to the right-side drive unit (26).

5. The battery electric vehicle (100) according to any one of claims 1 to 4,
wherein
the battery (14) and the connector (19) form a charging unit (25), and
an upper end of a portion of the charging unit (25) that is located rearward of a headrest (23) of the driver's seat (12) and a headrest (23) of the front passenger seat (13), and between the headrests (23) in the vehicle width direction is located lower than the headrests (23).

6. The battery electric vehicle (100) according to claim 5, wherein the connector (19) is disposed on the upper surface of the rear section (17) and at a position overlapping with one of the headrests (23) as viewed in a vehicle longitudinal direction.

7. The battery electric vehicle (100) according to any one of claims 1 to 6, wherein the battery (14) includes:
an intermediate section (15) that houses multiple battery cells (14b) and is disposed between the driver's seat (12) and the front passenger seat (13) so as to extend from a front end to a rear end of the passenger compartment (28); and
a front section (16) that houses multiple battery cells (14b) and is disposed forward of the intermediate section (15).
